# EUROPEAN PATENT APPLICATION

(11) **EP 4 447 277 A1**
(43) Date of publication of application: **16.10.2024**
(21) Application number: 24169795.2
(22) Date of filing: 11.04.2024
(51) Int. Cl.: H02K 1/2795, H02K 1/28

(54) **ROTOR OF AXIAL-FLUX ELECTRIC MOTOR**

(30) Priority: 12.04.2023 IT 202300006978
(71) Applicant: Texa S.p.A., 31050 Monastier di Treviso (TV) (IT)
(72) Inventor: Vianello, Bruno, 31050 Monastier di Treviso (IT)
(74) Representative: Citron, Massimiliano

(57) **Abstract**

A rotor of an axial-flux electric motor is described, comprising a support ring, a circular array of permanent magnets arranged around a rotation axis of the rotor so that each magnet emits a magnetic field with a polar axis parallel to the rotation axis, wherein each magnet has a first side and a second side opposite the first side, and the first side is fixed to the support ring, and between each magnet and the next in the array there is an empty space that separates them. A holding member is applied on the second side of the magnets and also occupies said empty space between each magnet. A mounting member is mounted for occupying said empty space by overlapping there the holding member and pressing the holding member towards the support ring thereby tensioning the holding element.

This structure better retains the magnets on the rotor.

## Description

The present invention relates to a rotor of an axial-flux electric motor, and to the motor equipped with the rotor.

In axial-flux electric motors of electric vehicles, taken here as an example, the rotor is a disc provided with a circular array of permanent magnets. The magnets are glued to the rotor surface in front of the windings of a stator. Since the magnets are subjected to strong stresses, appropriate measures are used to counteract them, such as special glues to fix the magnets to the rotor. Nonetheless, the cyclic forces generated on the magnets by the magnetic field and the vibrational motions of the rotor can in some cases lead to the detachment of the magnets from the rotor. It is a very dangerous event for the user, and also expensive, because the motor is seriously damaged.

The main object of the invention is to solve or at least mitigate the aforementioned problem. Another object of the invention is to make an improved rotor of electric motor in which the permanent magnets better resist stress and are better retained on the rotor.

These and other objects are achieved by what is reported in the attached claims; advantageous technical features are defined in the dependent claims. A rotor of an axial-flux motor is proposed, comprising:
a support ring,
a circular array of permanent magnets arranged around a rotation axis of the rotor so that each magnets emits a magnetic field with a polar axis parallel to the rotation axis, wherein each magnet has a first side and a second side opposite to the first side, and the first side is attached to the support ring, and between one, preferably each, magnet and the next in the array there is an empty space separating them.

To improve the fixing of the magnets inside the rotor, the rotor comprises:
a retaining member applied to extend on the second side of the magnets and into said empty space between each magnet, and
a mounting member mounted for
   occupying said empty space by overlapping there the retaining member and pressing the retaining member towards and/or against the support ring thereby putting tension on the retaining member.

The retaining member acts to receive and transmit to the magnets the tension imparted by the mounting member. For this purpose, the retaining member may be a rigid member or, more preferably, a flexible member; or even more preferably a layer of flexible material to better receive and transmit to the magnets the tension imparted by the mounting member. In particular, the retaining member is a foil or a sheath or a fabric or a sheet. As preferred materials, the retaining member is e.g. a reinforced fabric, e.g. with fiberglass or Kevlar. Or the retaining member is made of fiberglass or Kevlar.

In a variant, said empty space (between each adjacent pair of magnets) has a trapezoidal or triangular plan with a vertex directed towards, or in a direction opposite to, the rotation axis; and/or the width of said empty space diverges towards, or in a direction opposite to, the rotation axis.

Preferably, for better coupling, the mounting member comprises portions which are complementary to each empty space and adapted to fit therein. More preferably, the mounting member comprises portions adapted to fit into each empty space and form an interdigitated structure with the magnets.

In a more preferred variant, the mounting member comprises a central ring, which extends by 360 degrees around the rotation axis, from which said portions extend radially. In particular, said portions are spokes or segments which are linear and/or tapered towards the outside, wherein the plan of each spoke or segment is substantially complementary to the plan of said empty space.

A preferred structure of the retaining member envisages that it is shaped
to match the profile that the magnets exhibit on the side opposite the support ring and
to match the profile of any empty space between the magnets.

More preferably, the retaining member comprises
an alternating array of first flat portions and second flat portions, wherein the first flat portions have substantially the same plan as said second side and the second flat portions have substantially the same plan as that of said empty space, the first flat portions all lying on one same first plane and the second flat portions all lying on one same second plane, the first and second planes being orthogonal to the rotation axis and offset from each other, and
an array of third portions that join each first flat portion to each adjacent second flat portion.

The third portions preferably
are flat and/or
extend between the first and second plane, in particular they lie in a third plane orthogonal, or preferably inclined (to better guarantee the possibility of tensioning the retaining member through the thermal expansion of the spokes), with respect to the first and second plane.

To generate a tensile force on the retaining member when the mounting member heats up during the rotor operation preferably all or some spokes or segments comprise
a concavity or recess on the surface opposite the support ring; and/or
a central opening, e.g. a pass-through opening and/or which seen in plan view tapers towards the tip of the spoke or segment.

Preferably all or some spokes or segments comprise a flat base for resting on the retaining member within the empty space.

Preferably the rotor comprises a bell-shaped disc to house the support ring and the array of magnets, wherein the bell-shaped disc is provided with a raised containment edge having an internal surface, facing the rotation axis, which comprises a first and/or second undercut, useful for fixing the components.

More preferably the external profile of the major base of each magnet is complementary to - and inserted into - the first undercut.

More preferably the external profile of the tip of a spoke or segment is complementary to the undercut, and such profile is fitted in the second undercut.

To facilitate and/or enhance the fitting, the free end (or tip) of one or each spoke or segment has a beak or hooked portion curved towards the support ring.

Another aspect of the invention concerns an electric motor equipped with the rotor as defined above in one or each of the variants. In particular, an axial-flux electric motor having
said rotor, and
a stator with a circular array of windings, arranged around the rotation axis of the rotor, which in use generate a magnetic flux with a polar axis parallel to the rotation axis of the rotor.

Further advantages will be clear from the following description, which refers to a preferred embodiment of rotor wherein:

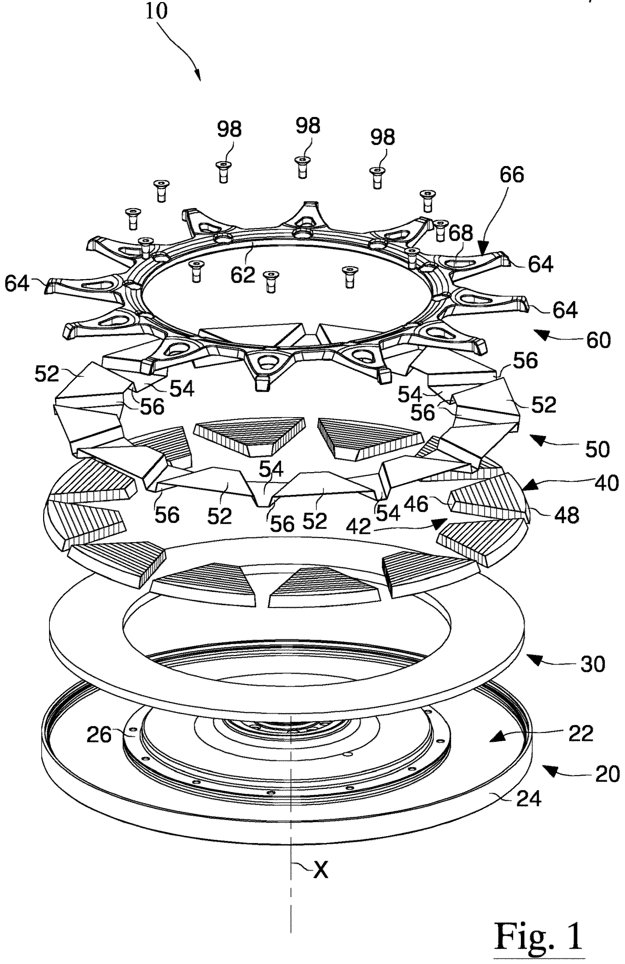

- figure 1 shows a three-dimensional, exploded view of a rotor;
- figure 2 shows a three-dimensional view of the assembled rotor;
- figure 3 shows a view of the rotor from above;
- figure 4 shows a cross-sectional view of the rotor according to the IV-IV plane.

Equal numbers in the figures indicate equal or substantially equal parts; and to avoid crowding the drawings, not all equal components are numbered.

The rotor 10 comprises e.g. the axial overlap of a bell-shaped disc 20, an annular support or ring 30, permanent magnets 40 arranged in circular array around the X-axis, a retaining layer or member 50 and a mounting member 60.

The disc 20 preferably comprises a circular recess 22 extending by 360 degrees around the X-axis between a raised edge 24 of the outer perimeter of the disc 20 and a central hub 26.

Each of the magnets 40 generates a magnetic field with a polar axis parallel to the X-axis. The magnets 40 preferably have substantially the shape of a flat plate with trapezoidal plan or of a trapezoidal-base prism (preferably an isosceles trapezoid), wherein the minor base 46 of the trapezoid faces the X-axis and the major base 48 faces the opposite direction. The major bases 48 of each magnet 40, which may be even curved, are in contact with the raised edge 24. However, other shapes are possible for the magnets 40, e.g. of a prism with a triangular plan or in general with a parallelepiped or prismatic shape.

The annular support 30 is sized to be housed inside the recess 22 and constitutes a support base on which the magnets 40 are fixed, e.g. via adhesive means. Preferably, the annular support 30 is formed of a strip of sheet metal spirally wound about the X-axis, so that the abutted edges of the strip form a plane. Thus, dissipation by eddy currents in the support 30 can be reduced.

A face (trapezoidal in the illustrated example) of each magnet 40 lies on one same plane orthogonal to the X-axis, in particular on the support 30. Above the magnets 40, on the face (trapezoidal in the illustrated example) opposite to the support 30, is applied the member 50, which is sandwich-like closed on the disc 20 by the mounting member 60. The member 50 may be a rigid or flexible member, such as for example. a sheet or sheath or fabric, more preferably a fiberglass or Kevlar reinforced fabric. Or the member 50 is made of fiberglass or Kevlar.

Given the circular arrangement and shape of the magnets 40, between one magnet 40 and the other there forms one same empty space 42, in the illustrated example having a trapezoidal or triangular plan whose width diverges towards the X-axis.

The member 50, in the assembled rotor, is shaped or shapeable for following the profile that the magnets 40 exhibit on the side opposite the support 30 and for occupying the spaces 42. For this purpose, the member 50 is preferably formed of an alternating array of flat portions 52 and flat portions 54.

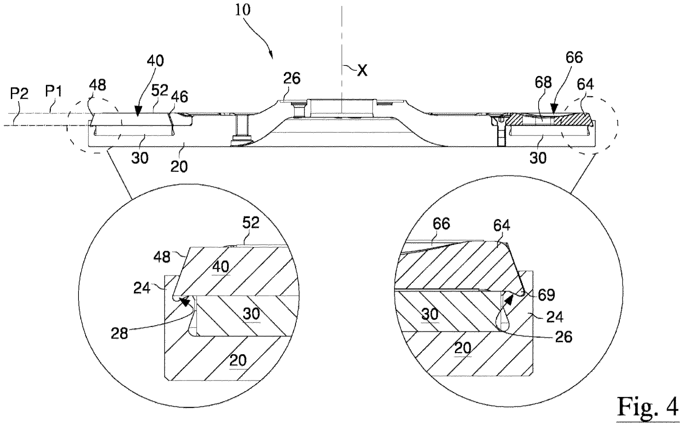

The flat portions 52 lie on the same plane P1 orthogonal to the X-axis; the flat portions 54 lie on the same plane P2 orthogonal to the X-axis. The plane P1 is parallel and offset with respect to the plane P2 (see fig. 4).

The flat portions 52 preferably have substantially the same plan as the magnets 40, but could also have a smaller surface or different plan. The flat portions 54 preferably have a plan substantially complementary to the space 42 but could also have a smaller extension or a different plan.

Each flat portion 52 is joined to the adjacent flat portion 54 by a rectangular portion 56 which lies in a plane orthogonal, or more preferably inclined, with respect to the planes P1, P2. E.g. the member 50 may be made by cutting a ring of flexible material and then, e.g. by molding or forming or drawing or bending, shaping it in 3D-space as defined above.

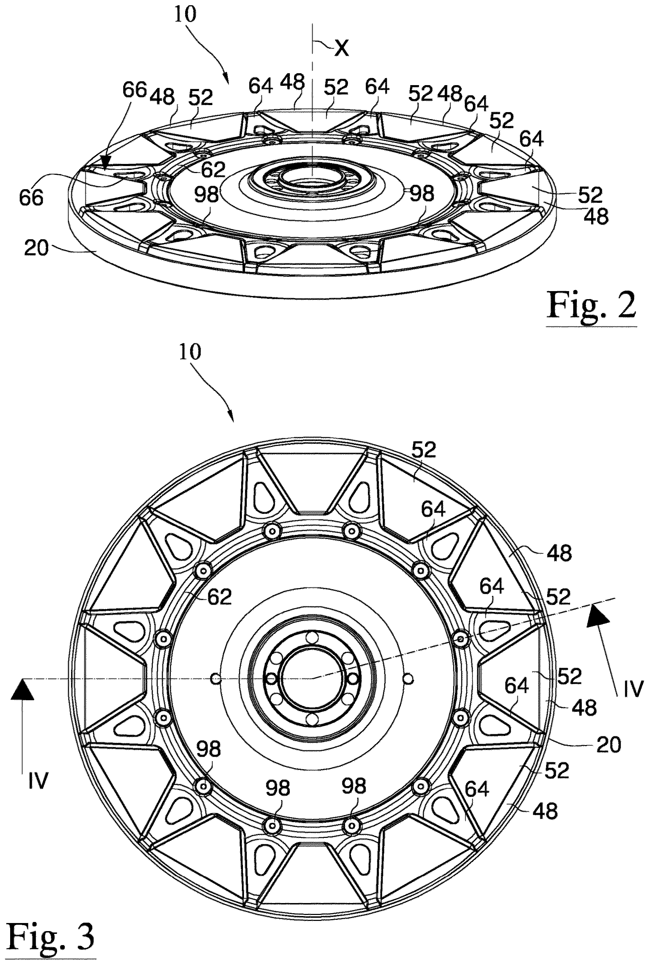

The mounting member 60 preferably comprises a central ring 62, which extends by 360 degrees around the X-axis, from which spokes 64 of tapered shape extend radially outwards. The plan of the spokes 64 is preferably substantially the same as that of the space 42, so that each spoke 64 can be inserted snugly between two magnets 40 and the tip of the spoke can reach up to the raised edge 24. Therefore, in the assembled rotor 10 the spokes 64 end up between the magnets 40, and the minor base or tip of the magnets 40 abuts against - or is almost in contact with - the central ring 62 (see fig. 2 and 3). When mounted, the spokes 64 and the magnets 40 then form an interdigitated structure.

During the assembly of the rotor 10, the support 30 is placed inside the recess 22, the magnets 40 are fixed on the free face of the support 30, the member 50 is superimposed on the free faces of the magnets 40, the mounting member 60 is superimposed on the member 50 and this structure is fixed integrally in a sandwich fashion by screws 98 between the central ring 62 and the central hub 26. A static fixing effect is then obtained thanks to the pressure of the mounting member 60 against the disc 20. In fact, the tightening of the member 60 on the rest of the rotor 10 squeezes the member 50 on and between the magnets 40, putting it under tension. This tension transmitted along the entire array of magnets 40 stabilizes them and enhances their anchoring to the rotor 10.

The structure of the rotor 10 involves a further fixing effect that develops during operation: when the temperature of the rotor 10 increases, the natural thermal expansion of the spokes 54 occurs, resulting in an increase of the tension of the member 50. To amplify the fixing effect due to the operating temperature, all or some spokes 64 are preferably designed with a particular shape (fig. 4): one or each spoke 64 comprises a concavity or recess 66 on the surface opposite the disc 20, and preferably exhibits a flat base for resting on the support 30. During the heating of the member 50, the concavity or recess 66 has the function of inducing an elastic deformation of the spoke 64 towards the disc 20 (imagine drawing a bow), also avoiding the undesirable contrary effect of an expansion in the opposite direction. That is to say, the spoke 64 deforms pressing the member 50 even more against the magnets 40 and the support 30.

One or each spoke 64 preferably comprises a central opening 68, e.g. a pass-through opening and/or which in plan tapers towards the tip of the spoke 64. The opening 68, too, has the function of promoting the elastic deformation of the spoke 64 towards the disc 20.

For greater effect, both the concavity or recess 66 and the opening 68 are implemented.

To better avoid the detachment or breakage of the magnets 40, preferably (see fig. 4) the internal surface of the raised edge 24 comprises an undercut 28 and the external profile of the major base 48 is complementary to the undercut 28. Such profile is snugly fitted inside the undercut 28 .

For the same reason, preferably the internal surface of the raised edge 24 comprises an undercut 26 and the external profile of the tip of a spoke 64 is complementary to the undercut 26. Such profile is fitted inside the undercut 26. To facilitate and/or strengthen the fit, the free end (or tip) of the spoke 64 has a beak or hooked portion 69 curved towards the disc 20.

Preferably the spaces 42 and/or the magnets 40 all have the same shape, for ease of construction, but not necessarily.

## Claims

1. Rotor of an axial-flux electric motor, comprising:
a support ring,
a circular array of permanent magnets arranged around a rotation axis of the rotor so that each magnet emits a magnetic field with a polar axis parallel to the rotation axis, wherein
each magnet has a first side and a second side opposite the first side, and the first side is fixed to the support ring, and
between each magnet and the next in the array there is an empty space that separates them,
a holding member applied so as to extend on the second side of the magnets and also inside said empty space between each magnet, and
a mounting member mounted for
occupying said empty space by overlapping there the holding member and pressing the holding member towards the support ring thereby tensioning the holding element.

2. Rotor according to claim 1, wherein the holding member is a layer of flexible material.

3. Rotor according to any preceding claim, wherein the mounting member comprises portions adapted to fit into each empty space and form an interdigitated structure with the magnets.

4. Rotor according to claim 3, wherein the mounting member comprises a central ring, extending by 360 degrees about the rotation axis, from which said portions extend radially.

5. Rotor according to claim 3 or 4, wherein said portions are spokes or linear segments, wherein the plan of each spoke or segment is substantially complementary to the plan of said empty space.

6. Rotor according to claim 3 or 4 or 5, wherein all or some of said portions comprise a concavity or recess on their surface opposite the support ring.

7. Rotor according to claim 3 or 4 or 5 or 6, wherein all or some of said portions comprise a central opening which in plan view tapers towards the tip of the spoke or segment.

8. Rotor according to any preceding claim, wherein the holding member comprises:
an alternating array of first flat portions and second flat portions, wherein the first flat portions have a plan substantially equal to said second side and the second flat portions have a plan substantially equal to that of said empty space, the first flat portions all lying on one same first plane and the second flat portions all lying on one same second plane, the first and second plane being orthogonal to the rotation axis and offset from each other, and
an array of third flat portions that join each first flat portion to each adjacent second flat portion extending between the first and second plane.

9. Rotor according to any preceding claim, comprising:
a disc housing the support ring and the circular array of magnets, the disc having a raised edge provided internally with an undercut,
and the outer profile of the tip of a spoke or segment is complementary to - and inserted within - the undercut.

10. Axial-flux electric motor comprising a rotor as in any preceding claim.
